# EUROPEAN PATENT SPECIFICATION

(11) **EP 2 526 647 B1**
(45) Date of publication and mention of the grant of the patent: **05.09.2018**
(21) Application number: 11734784.9
(22) Date of filing: 17.01.2011
(51) Int. Cl.: H04L 9/32

(54) **ELECTRONIC APPARATUS AND INTRODUCING METHOD THEREBY**
ELEKTRONISCHE VORRICHTUNG UND EINFÜHRUNGSVERFAHREN DAMIT
APPAREIL ÉLECTRONIQUE ET PROCÉDÉ D'INTRODUCTION ASSOCIÉ

(30) Priority: 22.01.2010 JP 2010012443
(43) Date of publication of application: 28.11.2012
(73) Proprietor: Ricoh Company, Ltd., Tokyo 143-8555 (JP)
(72) Inventor: OTA, Hiroshi, Tokyo 143-8555 (JP)
(74) Representative: White, Duncan Rohan
(86) International application number: PCT/JP2011/051142
(87) International publication number: WO 2011/090178

(56) References cited:
- JP-A- 2004 248 220
- JP-A- 2006 067 515
- US-A1- 2003 188 156
- US-A1- 2005 005 097
- JUNNKO HIRAISHI: 'Application functions mounted on 903i' NTT DOCOMO TECHNICAL JOURNAL vol. 14, no. 4, 01 January 2007, pages 31 - 36, XP008167764

## Description

### TECHNICAL FIELD

The present invention relates to an electronic apparatus such as an image forming apparatus including a copier, a printer, a facsimile machine, and a multifunction peripheral (abbreviated as "MFP") having plural functions such as copying, printing, or communication; an image reading apparatus (also referred to as "scanner apparatus"); and an information processing apparatus including a personal computer (PC).

### BACKGROUND ART

In an authentication system using an electronic certificate on a network that includes electronic apparatuses such as a digital copier; a printer; a facsimile machine; an image forming apparatus including an MFP having plural functions such as copying, printing, or communication; an image reading apparatus; or a PC, a scheme to directly sign a final electronic certificate (electronic certificate including a server certificate, a user certificate, and an apparatus certificate) by a root certificate authority (Root CA) provided on the network to verify validity of the electronic certificate is widely used.

As the above-described authentication system becomes more common, however, a processing load on the authentication system has been increasing because a limited number of root certificate authorities perform verification by directly signing a huge number of electronic certificates.

In view of this, such a scheme has been developed, in which an intermediate certificate authority is provided on the network in addition to the root certificate authority, and the intermediate certificate authority signs a final electronic certificate to verify the validity.

For example, a Hypertext Transfer Protocol Security (hereinafter abbreviated as "HTTPS") system is a typical example utilizing the authentication system that uses an electronic certificate. In this system, in order to verify a server certificate which is a final electronic certificate that has been signed in multiple stages by a root certificate authority and an intermediate certificate authority on a network, an HTTPS server on the network introduces an electronic certificate of the intermediate certificate authority (hereinafter referred to as "intermediate certificate") as a server certificate and returns the intermediate certificate to a client device on the network.

Further, in the above-described system, a method to return a pair of the server certificate and the intermediate certificate to the HTTPS server or client device has also been developed in order to return the intermediate certificate with the server certificate to the client device.

Conventionally, when using an intermediate certificate, there has been a technique to verify a certificate by utilizing a hierarchical structure of a public key certificate to reduce verification processes of a user in the case where the public key certificate is issued by a different certificate authority (for example, see Patent Document 1).

### [Patent Document 1]

Japanese Patent Application Publication No. H10-215245

In the conventional technique, however, when introducing an intermediate certificate into an electronic apparatus, the introduction of the intermediate certificate itself has to be implemented on a communication path using a certificate. Therefore, there has been a problem in that communication for introducing the intermediate certificate cannot be performed if an invalid electronic certificate is introduced when introducing the intermediate certificate.

US 2005/0005097A discloses a device storing as a chain a root certificate, an intermediate certificate signed by the root certificate, and a self-made certificate of the device itself, signed by the intermediate certificate; and a web browser for verifying these certificates.

US 2003/0188156A discloses a method comprising receiving an authentication certificate from a peer requesting a secure connection to an application, the authentication certificate including a certificate chain having at least one certificate; and using the authentication certificate to authorize the peer to the application by accessing a peer authorized certificates store (PACS) that stores authorized certificates.

### DISCLOSURE OF INVENTION

The present invention has been made in view of the above-described points, and it is an object of at least one embodiment of the invention to reliably implement an introduction of an intermediate certificate remotely via a communication path.

The present invention is in the apparatus of Claim 1 and the method of Claim 7.

### BRIEF DESCRIPTION OF DRAWINGS

FIG. 1 is a block diagram showing a main configuration of functions of a multifunction peripheral shown in FIG. 2;
FIG. 2 is a block diagram showing a configuration of a network system using a multifunction peripheral which is one embodiment of the electronic apparatus of the present invention;
FIG. 3 is a diagram showing an example of a chain structure between an apparatus certificate and intermediate certificates;
FIG. 4 is a diagram showing an example of states of certificates managed inside the apparatus by a certificate manager of the multifunction peripheral shown in FIG. 1;
FIG. 5 is a sequence diagram showing processes in simultaneously introducing an apparatus certificate and an intermediate certificate into the multifunction peripheral of the network system shown in FIG. 2;
FIG. 6 is a sequence diagram showing subsequent processes of FIG. 5;
FIG. 7 is a flowchart showing a process in simultaneously introducing an apparatus certificate and an intermediate certificate in the multifunction peripheral shown in FIG. 1;
FIG. 8 is a flowchart showing a specific process of a process for separating an apparatus certificate and an intermediate certificate shown in FIG. 7;
FIG. 9 is a flowchart showing a specific process of a verification process of an apparatus certificate shown in FIG. 7;
FIG. 10 is a flowchart showing a specific process of a verification process of an intermediate certificate shown in FIG. 7;
FIG. 11 is a diagram showing an example of an apparatus certificate screen displayed in an operation to introduce an apparatus certificate and an intermediate certificate in the multifunction peripheral shown in FIG. 1;
FIG. 12 is a diagram showing an example of a certificate item contents input screen displayed in an operation to introduce an apparatus certificate and an intermediate certificate in the multifunction peripheral shown in FIG. 1;
FIG. 13 is a diagram showing an example of a message screen displayed in the operation to introduce the apparatus certificate and intermediate certificate in the multifunction peripheral shown in FIG. 1;
FIG. 14 is a diagram showing an example of a certificate detailed information screen displayed in the operation to introduce the apparatus certificate and intermediate certificate in the multifunction peripheral shown in FIG. 1;
FIG. 15 is a diagram showing an example of an apparatus certificate introduction screen displayed in the operation to introduce the apparatus certificate and intermediate certificate in the multifunction peripheral shown in FIG. 1;
FIG. 16 is a diagram showing an example of another message screen displayed in the operation to introduce the apparatus certificate and intermediate certificate in the multifunction peripheral shown in FIG. 1;
FIG. 17 is a diagram showing an example of an error message screen displayed in the operation to introduce the apparatus certificate and intermediate certificate in the multifunction peripheral shown in FIG. 1; and
FIG. 18 is a diagram showing an example of another certificate detailed information screen displayed in the operation to introduce the apparatus certificate and intermediate certificate in the multifunction peripheral shown in FIG. 1.

### BEST MODE FOR CARRYING OUT THE INVENTION

An embodiment of the present invention is specifically described below with reference to the drawings.

### [Embodiment]

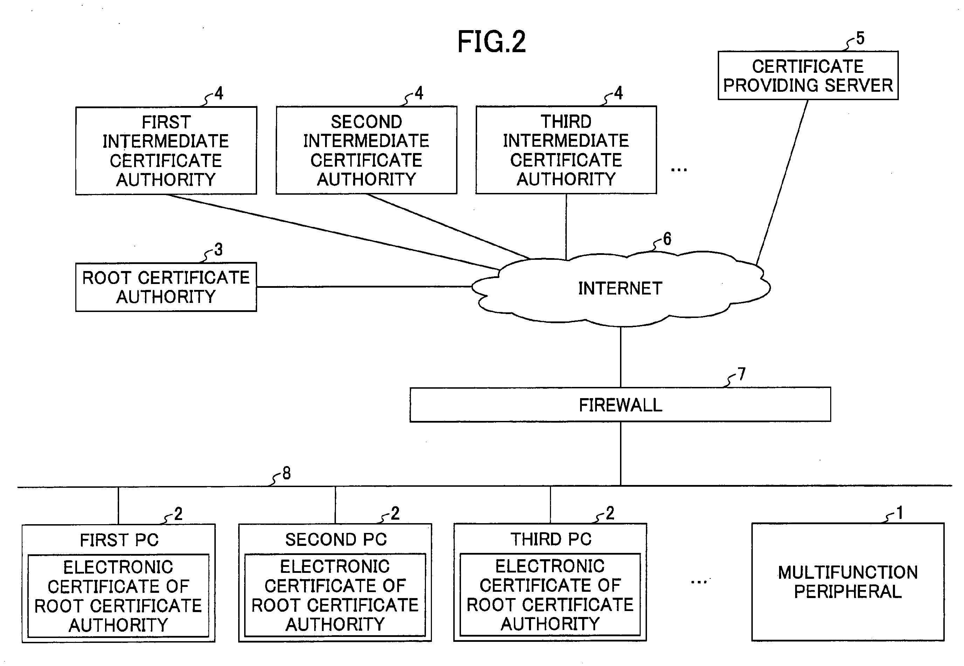

FIG. 2 is a block diagram showing a configuration of a network system using a multifunction peripheral which is one embodiment of the electronic apparatus of the present invention.

A multifunction peripheral (MFP) 1 of this network system is an image forming apparatus having plural kinds of functions including a scanner function, a copying function, a printer function, and a communicating function. This multifunction peripheral 1 can communicate with PCs 2 such as first to third PCs which are plural computers via a local area network (LAN) 8.

Further, there is a certificate providing server 5 for issuing an apparatus certificate to the multifunction peripheral 1 via Internet 6 and a firewall 7.

This certificate providing server 5 is a server maintained by a certificate providing company.

Further, on the Internet 6, there are a root certificate authority (Root CA) 3 that authenticates validity of the root certificate authority 3 itself, and plural intermediate certificate authorities 4 such as first to third intermediate certificate authorities. The validity of the intermediate certificate authority 4 is authenticated by an authentication by the root certificate authority 3.

In FIG. 2, there are one each of the multifunction peripheral 1, root certificate authority 3, and certificate providing server 5. However, there may be plural of each of the multifunction peripheral 1, root certificate authority 3, and certificate providing server 5. Moreover, the numbers of the PCs 2 and intermediate certificate authorities 4 are not limited to three, and may be more.

In the PCs 2, electronic certificates of the root certificate authority 3 are installed in advance. The validity of the root certificate authority 3 can be verified by these electronic certificates.

The certificate providing server 5 stores intermediate certificates of the intermediate certificate authorities 4 such as the first to third intermediate certificate authorities. The certificate providing server 5 has a function to apply a signature by utilizing the intermediate certificate authorities 4 in response to a request to sign an apparatus certificate that is requested by a user including the multifunction peripheral 1 and PCs 2. When there is a request to sign an apparatus certificate from the user, the certificate providing server 5 returns a pair of the apparatus certificate that has been signed by utilizing the intermediate certificate authority 4 and the intermediate certificate of the intermediate certificate authority 4 which applied the signature to the multifunction peripheral 1 and PCs 2 of the user.

In this embodiment, the network system in the case of using the certificate providing server 5 of the certificate providing company has been shown. However, an intermediate certificate authority can be provided in a network environment operated in an office and a certificate signing method can be performed in another stage.

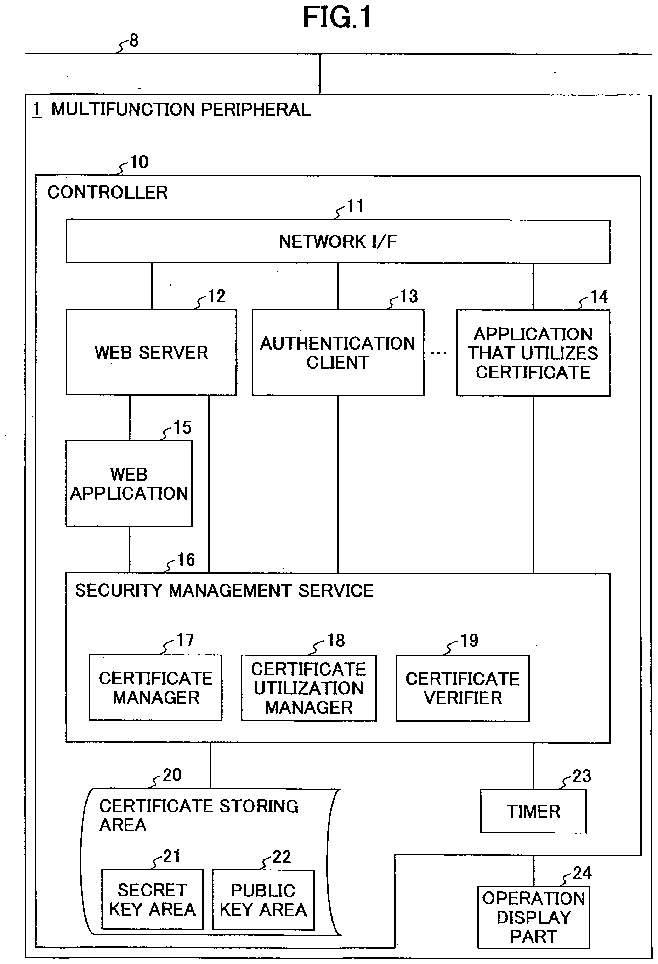

FIG. 1 is a block diagram showing a main configuration of functions of the multifunction peripheral 1 shown in FIG. 2.

This multifunction peripheral 1 has a feature in that an intermediate certificate can be reliably introduced remotely via a communication path when introducing the intermediate certificate.

This multifunction peripheral 1 includes a controller 10 realized by a microcomputer formed of a CPU, a ROM, and a RAM.

A network interface (I/F) 11 of the controller 10 corresponds to a communication unit that receives network accesses via the LAN 8 from remote apparatuses including the PCs 2 such as the first to third PCs and the certificate providing server 5 shown in FIG. 2.

A web server 12, which is, for example, an HTTP(S) server, allows performing various processes utilizing a browser from remote apparatuses via the LAN 8.

A web application 15 can introduce various kinds of information from remote apparatuses via the LAN 8 by utilizing a browser. For example, the web application 15 can introduce an apparatus certificate of this multifunction peripheral 1 and an intermediate certificate with respect to the apparatus certificate from the certificate providing server 5.

A security management service 16 is formed of a certificate manager 17, a certificate utilization manager 18, and a certificate verifier 19 and performs processes of a management service of the apparatus certificate of this multifunction peripheral 1.

The certificate manager 17 manages states of the apparatus certificate and intermediate certificate. The certificate manager 17 stores and deletes the apparatus certificate and intermediate certificate into and from a certificate storing area 20.

The certificate utilization manager 18 can manage which certificate is utilized in what manner by an authentication client 13 that utilizes the apparatus certificate and intermediate certificate, and an application 14 that utilizes the certificate.

The certificate verifier 19 verifies validities of the apparatus certificate and an intermediate certificate when introducing the apparatus certificate or intermediate certificate.

In the above-described verification of the validity, the following contents can be verified.
1. Verification of whether a format of a certificate is established as a certificate (verification of a format of a certificate)
2. Verification of whether a chain of certificates is established (verification of a chain of an intermediate certificate with an apparatus certificate)
3. Verification of whether a certificate is within an expiration date (verification of an expiration date of a certificate)
4. Verification of whether a common name of a certificate matches a host name used for communication (verification of a match with a name of the self apparatus that acquired an apparatus certificate)

The authentication client 13 is one of the applications 14 that utilizes a certificate. For example, there are an HTTP(S) server, an IEEE 802.1X authentication client, and the like as the authentication client 13. There may actually be other applications that utilize a certificate. Those applications that utilize a certificate can change the handling of the certificate depending on a protocol and an implementation of the applications that utilize a certificate.

For example, in the IEEE 802.1X authentication client, a server side is not implemented as being capable of utilizing an intermediate certificate. Therefore, such a setting is possible that the intermediate certificate is not handled in the multifunction peripheral 1.

The certificate storing area 20 is a recording device, which includes a secret key area 21 and a public key area 22. In order to protect a secret key of the secret key area 21, the secret key can be more strictly handled than a public key of the public key area 22 by setting a password, and the like.

A timer 23 is used for measuring time. The timer 23 can be set at a correct time by utilizing an NTP (Network Time Protocol) server and the like. A current time can be used for judging the expiration date of a certificate.

An operation display part 24 displays various operation screens based on a control of the controller 10, receives inputs of various information items with respect to the operation screens, and outputs the input information to the controller 10.

The certificate manager 17 functions as a separation unit for separating an intermediate certificate and an apparatus certificate acquired by the communicating unit from an intermediate certificate authority, and as an introducing unit for introducing the apparatus certificate and intermediate certificate only when the validities are verified by both an apparatus certificate verifying unit and an intermediate certificate verifying unit.

Further, the certificate verifier 19 functions as the apparatus certificate verifying unit for verifying the validity of the separated apparatus certificate, and as the intermediate certificate verifying unit for verifying validity of a signature of the separated intermediate certificate with respect to the apparatus certificate.

As the verification, the validity of the apparatus certificate is verified by verifying a format of the apparatus certificate, verifying a match of the apparatus certificate with a name of a self apparatus that acquired the apparatus certificate, and verifying an expiration date of the apparatus certificate.

Further, the validity of the intermediate certificate is verified by a verification of a chain of the intermediate certificate with the apparatus certificate and a verification of an expiration date of the intermediate certificate.

Further, the certificate manager 17 also functions as a unit for simultaneously introducing an apparatus certificate and an intermediate certificate, or as a unit for introducing only the intermediate certificate to update the intermediate certificate when extending the expiration date of the intermediate certificate.

Furthermore, the certificate manager 17 also functions as a unit for displaying detailed information of the apparatus certificate and the intermediate certificate.

Next, an example of a chain structure of the apparatus certificate and intermediate certificates is described.

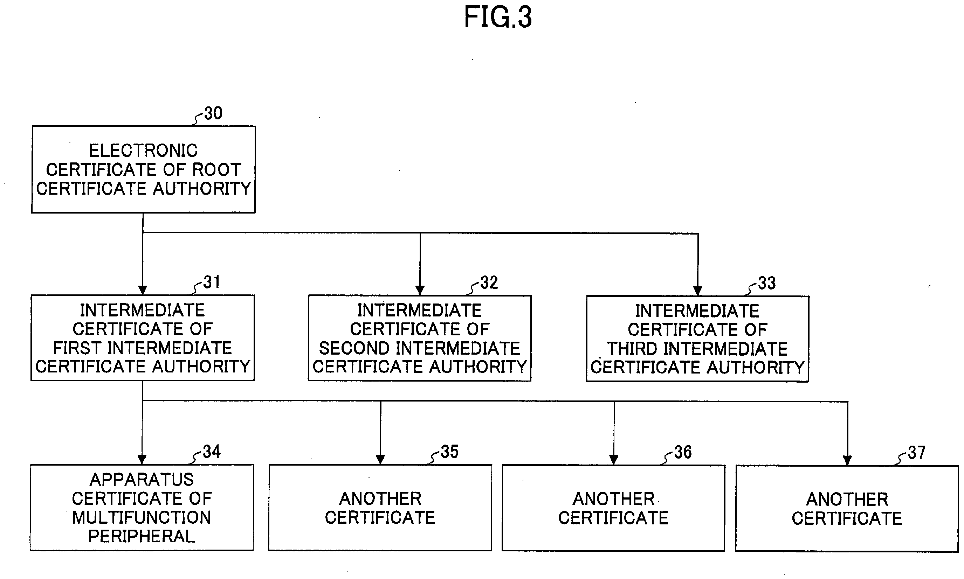

FIG. 3 is a diagram showing an example of the chain structure of the apparatus certificate and intermediate certificates.

An electronic certificate 30 of the root certificate authority 3 shown in FIG. 2 is introduced in each of the PCs 2 such as the first to third PCs in an initial state. Therefore, the electronic certificate 30 of the root certificate authority 3 is not required to be verified.

An intermediate certificate 31 of the first intermediate certificate authority 4 is signed by the root certificate authority 3. Therefore, each of the PCs 2 such as the first to third PCs that have the electronic certificates 30 of the root certificate authority 3 can easily verify the intermediate certificate 31 of the first intermediate certificate authority 4. The same applies to an intermediate certificate 32 of the second intermediate certificate authority 4 and an intermediate certificate 33 of the third intermediate certificate authority 4.

However, an apparatus certificate 34 of the multifunction peripheral 1 is not directly signed by the root certificate authority 3. Therefore, the intermediate certificate 31 of the first intermediate certificate authority 4 is required in order to verify the apparatus certificate 34 of the multifunction peripheral 1. The same applies to other certificates 35 to 37.

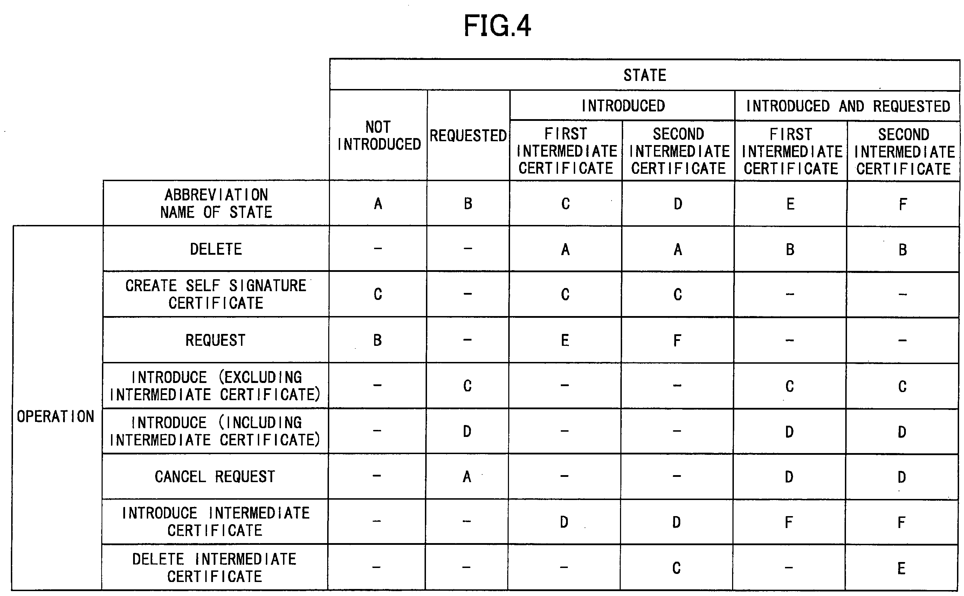

Next, FIG. 4 is a diagram showing an example of states of certificates managed by the certificate manager 17 of the multifunction peripheral 1 inside the apparatus.

With respect to the apparatus certificate and intermediate certificates, various operations can be performed such as "delete", "create self signature certificate", "request", "introduce (excluding intermediate certificate)", "introduce (including intermediate certificate)", "cancel request", "introduce intermediate certificate", and "delete intermediate certificate".

As to the apparatus certificate and intermediate certificates, there are various states such as "not introduced (A)", "requested (B)", "first intermediate certificate (of first intermediate certificate authority) already introduced (C)", "second intermediate certificate (of second intermediate certificate authority) already introduced (D)", "first intermediate certificate (of first intermediate certificate authority) introduced and requested (E)", and "second intermediate certificate (of second intermediate certificate authority) introduced and requested (F)".

When an operation to introduce an intermediate certificate is performed in the case where the intermediate certificate has already been introduced, the existing intermediate certificate is overwritten. When an operation to delete the intermediate certificate is performed in the case where the intermediate certificate has already been introduced, the existing intermediate certificate is deleted, which leads to a state where no intermediate certificate exists.

Further, there is an operation that cannot be processed depending on a state of a certificate.

Next, a process performed when introducing an apparatus certificate and an intermediate certificate into the multifunction peripheral 1 is described.

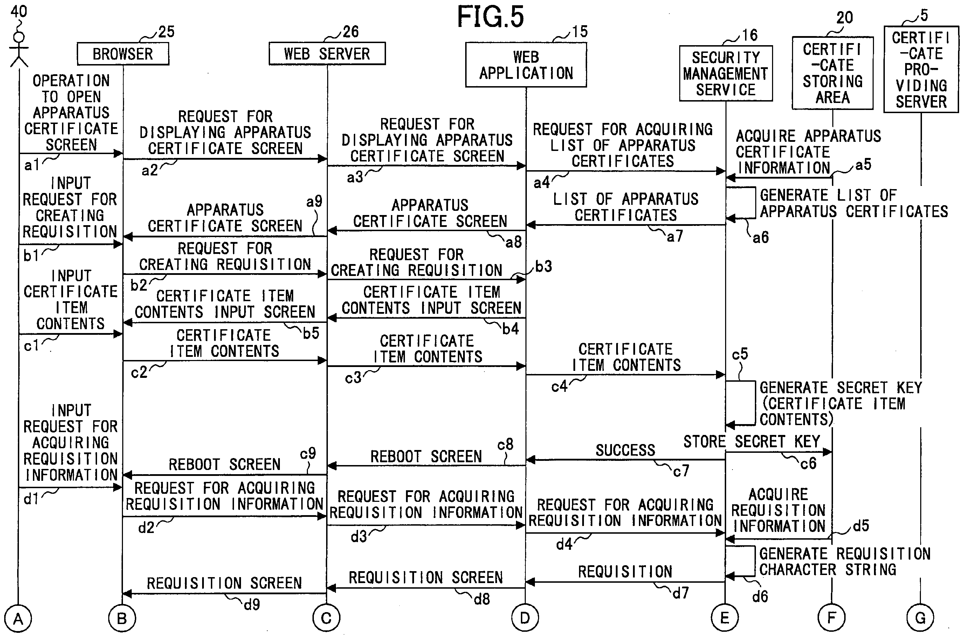

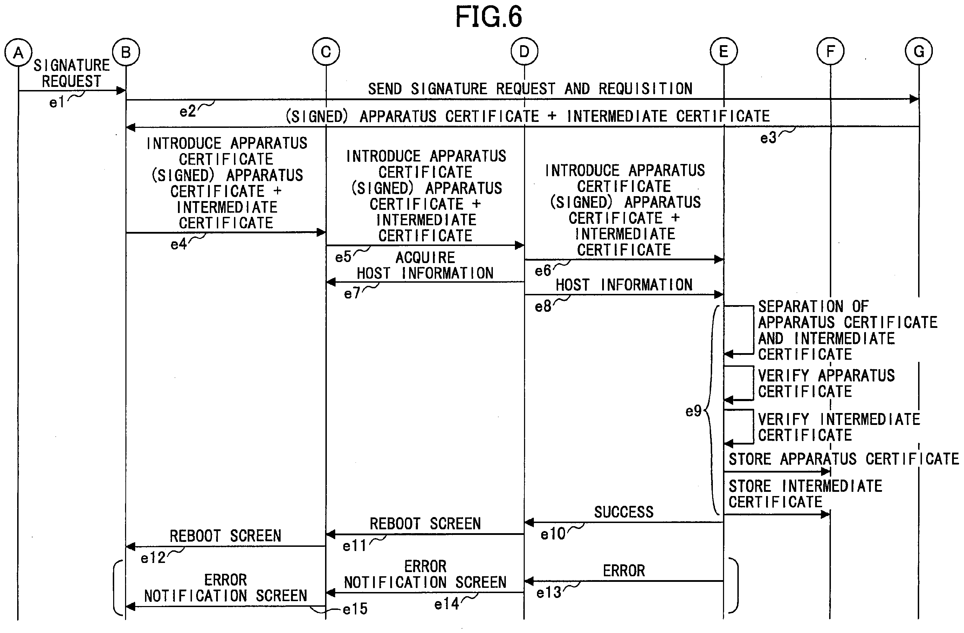

FIGS. 5 and 6 are sequence diagrams showing processes performed when simultaneously introducing the apparatus certificate and intermediate certificate into the multifunction peripheral 1 of the network system shown in FIG. 2.

Note that symbols A to G in circles in FIGS. 5 and 6 indicate respective connecting destinations from FIG. 5 to FIG. 6.

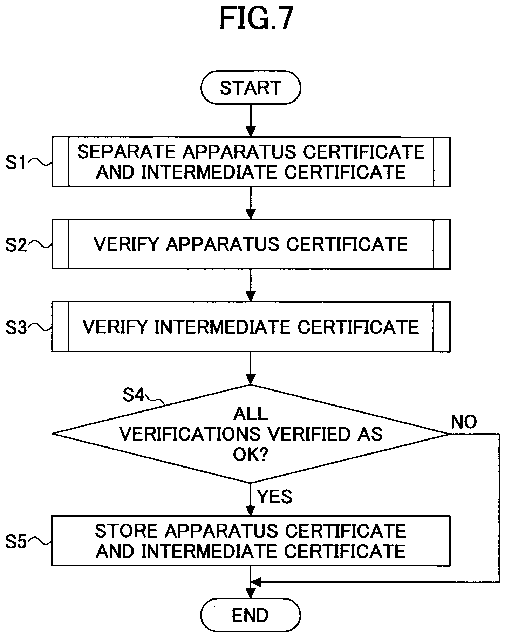

FIG. 7 is a flowchart showing a process of a main routine performed when simultaneously introducing the apparatus certificate and intermediate certificate in the multifunction peripheral 1 shown in FIG. 1.

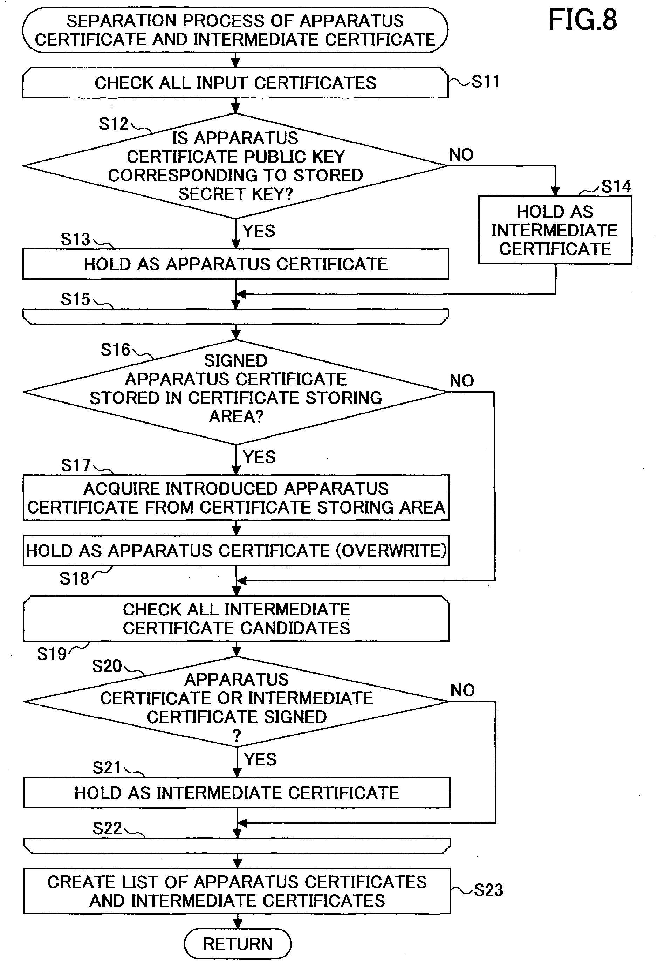

FIG. 8 is a flowchart showing a sub-routine process of a process for separating the apparatus certificate and intermediate certificate shown in FIG. 7.

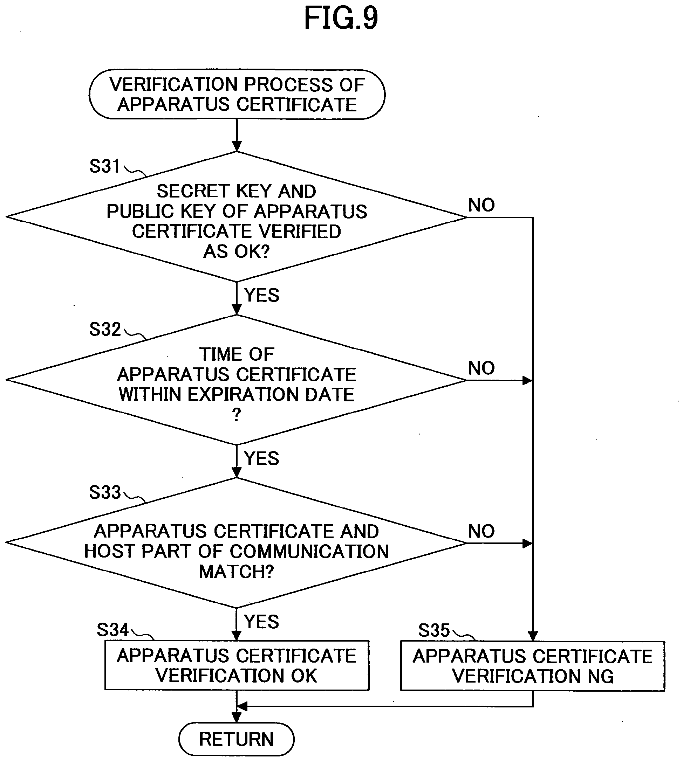

FIG. 9 is a flowchart showing a sub-routine process of a process for verifying the apparatus certificate shown in FIG. 7.

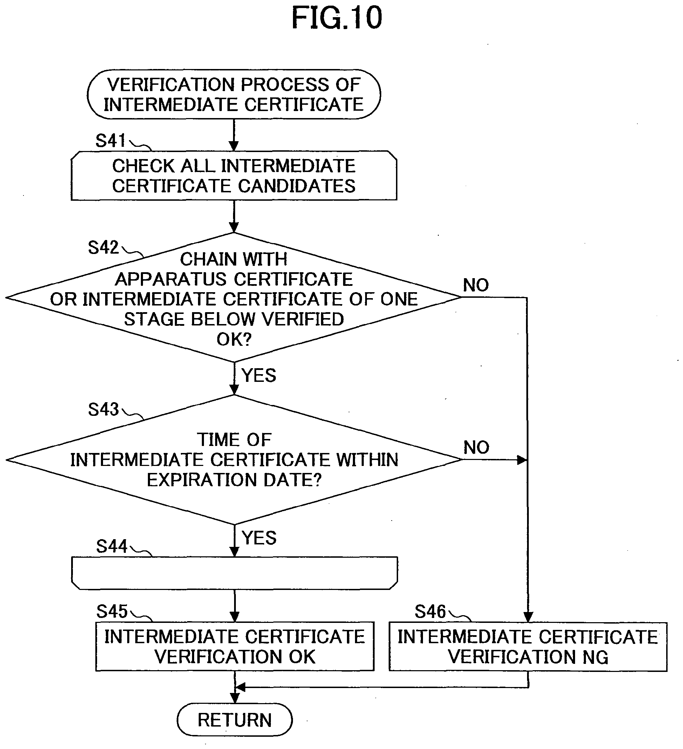

FIG. 10 is a flowchart showing a sub-routine process of a process for verifying the intermediate certificate shown in FIG. 7.

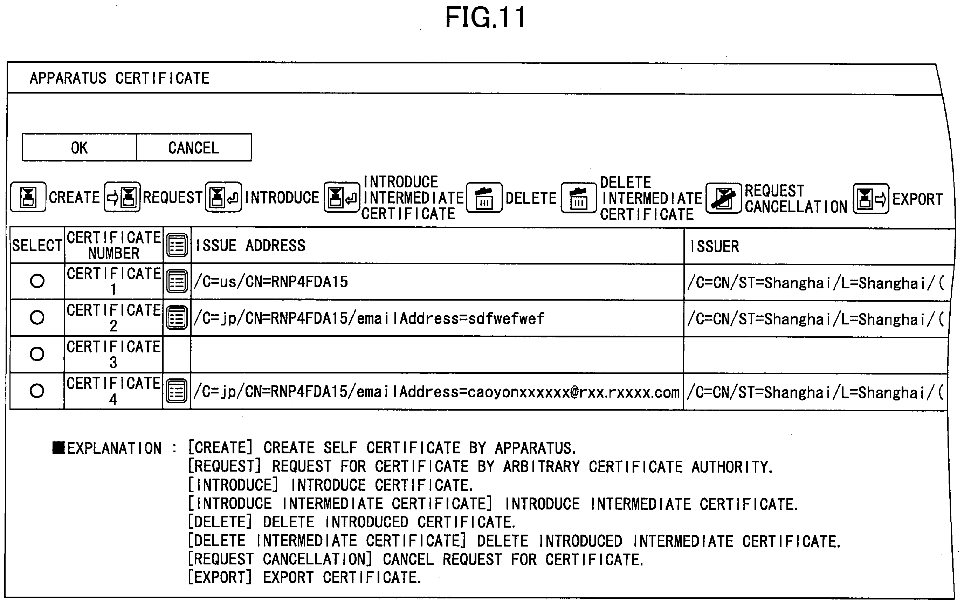

FIG. 11 is a diagram showing an example of an apparatus certificate screen displayed in an operation to introduce the apparatus certificate and intermediate certificate in the multifunction peripheral 1 shown in FIG. 1.

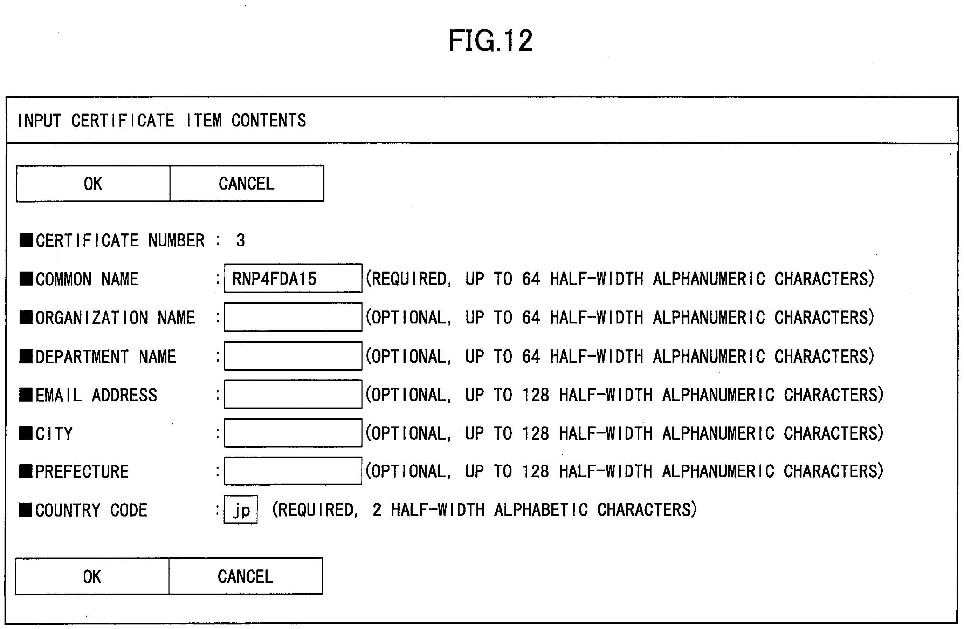

FIG. 12 is a diagram showing an example of a certificate item contents input screen displayed in an operation to introduce the apparatus certificate and intermediate certificate in the multifunction peripheral 1 shown in FIG. 1.

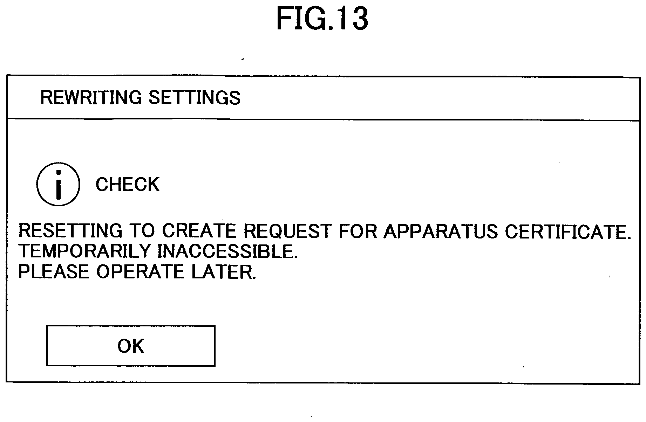

FIG. 13 is a diagram showing an example of a message screen displayed in an operation to introduce the apparatus certificate and intermediate certificate in the multifunction peripheral 1 shown in FIG. 1.

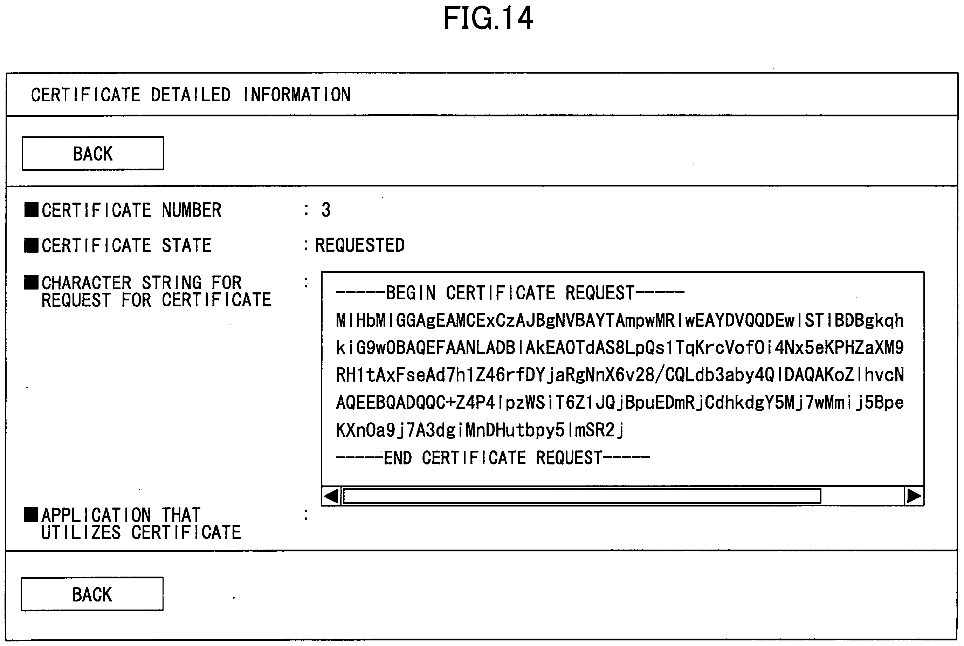

FIG. 14 is a diagram showing an example of a certificate detailed information screen displayed in an operation to introduce the apparatus certificate and intermediate certificate in the multifunction peripheral 1 shown in FIG. 1.

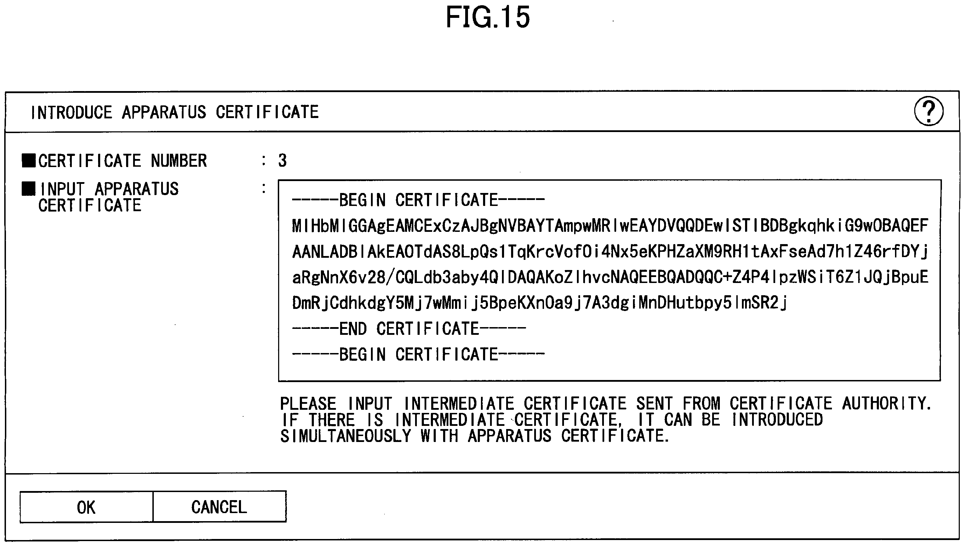

FIG. 15 is a diagram showing an example of an apparatus certificate introduction screen displayed in an operation to introduce the apparatus certificate and intermediate certificate in the multifunction peripheral 1 shown in FIG. 1.

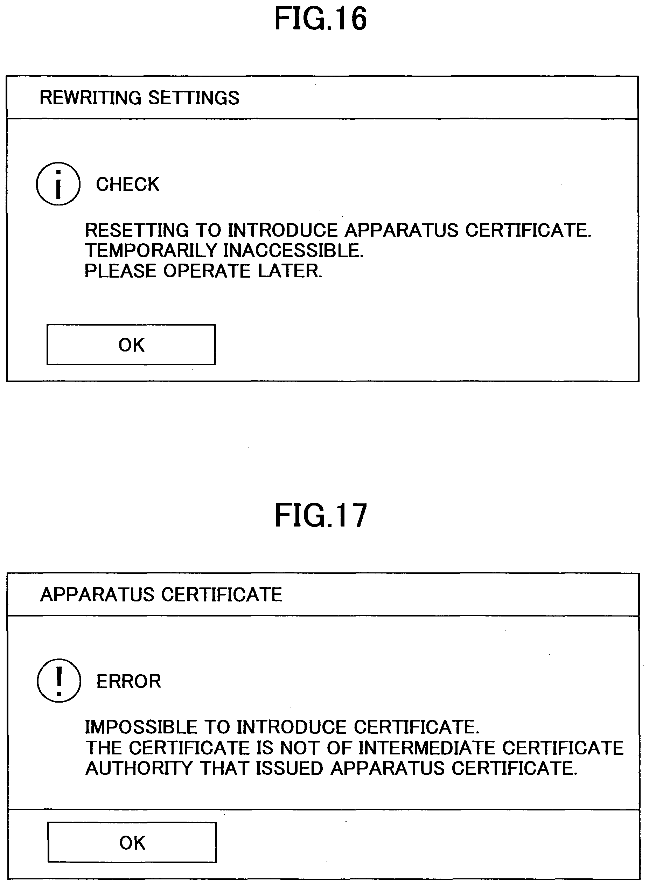

FIG. 16 is a diagram showing an example of another message screen displayed in an operation to introduce the apparatus certificate and intermediate certificate in the multifunction peripheral 1 shown in FIG. 1.

FIG. 17 is a diagram showing an example of an error message screen displayed in an operation to introduce the apparatus certificate and intermediate certificate in the multifunction peripheral 1 shown in FIG. 1.

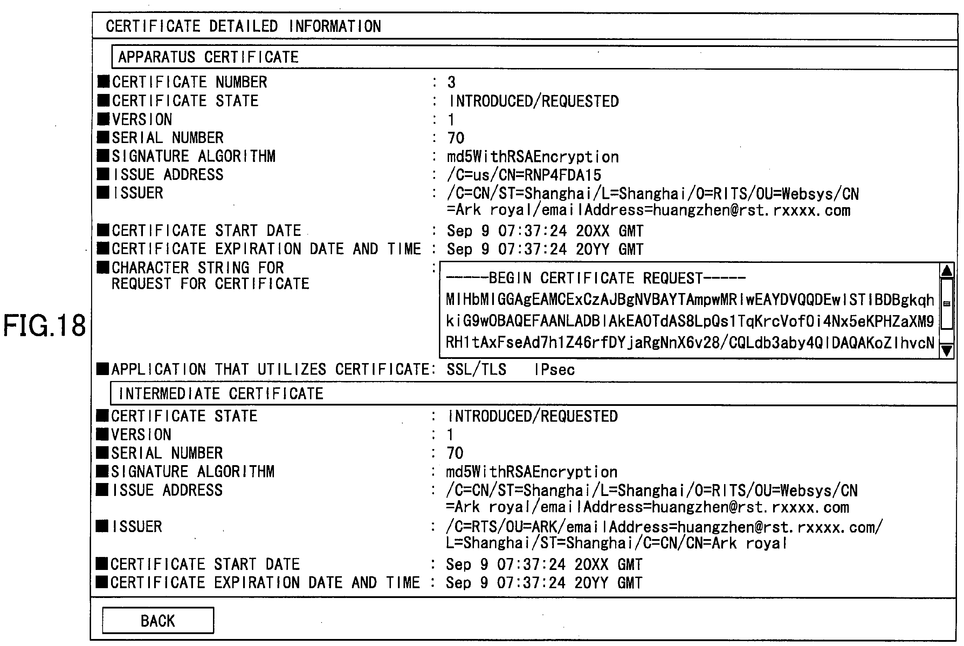

FIG. 18 is a diagram showing an example of another certificate detailed information screen displayed in an operation to introduce the apparatus certificate and intermediate certificate in the multifunction peripheral 1 shown in FIG. 1.

When newly introducing an apparatus certificate in the multifunction peripheral 1, as shown in FIG. 5, a user 40 operates a browser 25 of the operation display part 24 to open the apparatus certificate screen (a1). Then, the browser 25 sends an apparatus certificate screen display request to a web server 26 (a2). The web server 26 then sends the apparatus certificate screen display request to the web application 15 (a3). The web application 15 requests the security management service 16 for acquisition of a list of apparatus certificates (a4).

The security management service 16 acquires apparatus certificate information from the certificate storing area 20 (a5), creates the list of apparatus certificates based on the apparatus certificate information (a6), and sends the created list to the web application 15 (a7).

The web application 15 sends an apparatus certificate screen based on the list of apparatus certificates to the web server 26 (a8), the web server 26 sends the apparatus certificate screen to the browser 25 (a9), and the browser 25 displays the apparatus certificate screen as shown in FIG. 11.

In FIG. 5, the user 40 selects an apparatus certificate that the user 40 desires to newly introduce from the list of apparatus certificates on the apparatus certificate screen of the browser 25 and inputs a request to create a requisition of the selected apparatus certificate (b1). Then, the browser 25 sends the request to create the requisition of the selected apparatus certificate to the web server 26 (b2). The web server 26 then sends the request to create the requisition to the web application 15 (b3).

The web application 15 sends a certificate item contents input screen to the web server 26 in response to the request to create the requisition (b4). The web server 26 sends the certificate item contents input screen to the browser 25 (b5). The browser 25 then displays the certificate item contents input screen as shown in FIG. 12.

In FIG. 5, when the user 40 inputs certificate item contents on the certificate item contents input screen of the browser 25 (c1), the browser 25 sends the certificate item contents to the web server 26 (c2). The web server 26 sends the certificate item contents to the web application 15 (c3). The web application 15 sends the certificate item contents to the security management service 16 (c4). The security management service 16 generates a secret key on the basis of the certificate item contents (c5) and stores the secret key in the secret key area 21 of the certificate storing area 20 (c6), and at the same time as performing rebooting, sends a notification of success to the web application 15 (c7).

In this manner, the secret key is created when creating the requisition that is created for signing the apparatus certificate. Here, the secret key is created inside the multifunction peripheral 1, however, the secret key may be introduced externally. At that time, security can be enhanced by separately inputting password information and the like for protecting the secret key.

The web application 15 sends a reboot screen to the web server 26 (c8), and the web server 26 sends the reboot screen to the browser 25 (c9). The browser 25 displays the reboot screen reporting that settings are being rewritten, as shown in FIG. 13.

In FIG. 5, the user 40 inputs a requisition information acquisition request to the browser 25 (d1). The browser 25 sends the requisition information acquisition request to the web server 26 (d2). The web server 26 sends the requisition information acquisition request to the web application 15 (d3). The web application 15 sends the requisition information acquisition request to the security management service 16 (d4). The security management service 16 acquires requisition information from the certificate storing area 20 (d5), creates a requisition character string from the requisition information (d6), and sends the requisition to the web application 15 (d7).

In this manner, in order to send the contents of the requisition to the certificate providing server 5, the requisition information is acquired from the certificate detailed information of the apparatus certificate.

The web application 15 sends a requisition screen to the web server 26 (d8). The web server 26 sends the requisition screen to the browser 25 (d9). The browser 25 displays a certificate detailed information screen as shown in FIG. 14.

In this manner, the apparatus certificate screen is opened, the certificate is selected, and the requisition is created.

Next, as shown in FIG. 6, when the user 40 instructs the browser 25 a signature request (e1), the browser 25 sends the signature request and the requisition to the certificate providing server 5 (e2). Receiving a signed apparatus certificate and an intermediate certificate of the apparatus certificate from the certificate providing server 5 (e3), the browser 25 displays an apparatus certificate introduction screen as shown in FIG. 15.

In FIG. 6, the browser 25 sends an instruction to introduce the apparatus certificate, the signed apparatus certificate, and the intermediate certificate of the apparatus certificate to the web server 26 (e4). The web server 26 then sends the instruction to introduce the apparatus certificate, the signed apparatus certificate, and the intermediate certificate of the apparatus certificate to the web application 15 (e5). The web application 15 then sends the instruction to introduce the apparatus certificate, the signed apparatus certificate, and the intermediate certificate of the apparatus certificate to the security management service 16 (e6) and at the same time acquires host information from the web server 26 (e7), and sends the host information to the security management service 16 (e8).

The security management service 16 separates the apparatus certificate and intermediate certificate, verifies each of the apparatus certificate and intermediate certificate, and stores the verified apparatus certificate and intermediate certificate in the certificate storing area 20 (e9).

In this process, as shown in the main routine of FIG. 7, the certificate manager 17 separates the apparatus certificate and intermediate certificate in step (shown as "S" in the drawings) 1, the certificate verifier 19 performs a verification process of the apparatus certificate to verify validity of the apparatus certificate in step 2, and the certificate verifier 19 performs a verification process of the intermediate certificate to verify validity of a signature of the intermediate certificate with respect to the apparatus certificate in step 3, and the certificate verifier 19 determines whether all verifications of the apparatus certificate and intermediate certificate are verified as OK (verification of the validities are OK) in step 4; if all the verifications are verified as OK, the certificate manager 17 stores the apparatus certificate and intermediate certificate in the certificate storing area 20 and introduces the apparatus certificate and intermediate certificate in step 5, and this process is terminated.

Further, when any of the verifications of the apparatus certificate and intermediate certificate are verified as NG (not good) in step 4, an error notification is made and this process is terminated.

In this manner, in introducing the apparatus certificate, the apparatus certificate and intermediate certificate are separated, verification of each of the apparatus certificate and intermediate certificate is performed, and only when both the apparatus certificate and intermediate certificate are verified as OK, the apparatus certificate and intermediate certificate are stored and introduced.

In the introduction of the apparatus certificate of this embodiment, the apparatus certificate and intermediate certificate are stored after performing the verifications of the apparatus certificate and intermediate certificate.

Next, the process to separate the apparatus certificate and intermediate certificate is described in detail.

In the process to separate the apparatus certificate and intermediate certificate, as shown in the sub-routine of FIG. 8, the certificate manager 17 repeates the following process to all the input certificates in steps 11-15. The certificate manager 17 determines whether the apparatus certificate is a public key corresponding to the stored secret key in step 12. If the apparatus certificate is a public key corresponding to the secret key, the certificate manager 17 holds the apparatus certificate as an apparatus certificate in step 13. If the apparatus certificate is not a public key corresponding to the secret key, the certificate manager 17 holds the certificate as an intermediate certificate in step 14. When all the input certificates are checked, the process proceeds to step 16.

In step 16, it is determined whether a signed apparatus certificate is stored in the certificate storing area 20. If the signed apparatus certificate is stored in the certificate storing area 20, the process proceeds to step 17. If the signed apparatus certificate is not stored in the certificate storing area 20, the process proceeds to step 19.

In step 17, the apparatus certificate that is already introduced is acquired from the certificate storing area, and held (overwritten) as an apparatus certificate in step 18. Then, the process proceeds to step 19.

In processes of steps 19-22, the following process is repeated to all the held candidates of the intermediate certificates. In step 20, whether the apparatus certificate or intermediate certificate is signed is determined. If the apparatus certificate or intermediate certificate is signed, the certificate is held as an intermediate certificate in step 21. If the apparatus certificate or intermediate certificate is not signed, a process to check the next candidate is performed. When all the candidates of the intermediate certificates are checked, the process proceeds to step 23.

In step 23, a list of the apparatus certificate and intermediate certificate is formed and the process returns to the main routine of FIG. 1.

In this manner, the apparatus certificate and intermediate certificate can be simultaneously input to the same text box. Therefore, in order to know which one is the apparatus certificate and which one is the intermediate certificate, correspondence with the secret key is required to be checked.

In that case, it can be interpreted such that a certificate corresponding to the secret key is the apparatus certificate, while a certificate that does not correspond to the secret key is the intermediate certificate.

Since there is a possibility that there are plural intermediate certificates, the candidates of the intermediate certificate are checked once to verify whether the candidates are connected to the apparatus certificate by a chain.

Here, even when there is a candidate that is not the intermediate certificate, the candidate is put in a list of intermediate certificates.

In that case, since verification cannot be performed in a verification part of the intermediate certificate, an error occurs.

Next, a verification process of the apparatus certificate is described in detail.

As to the verification process of the apparatus certificate, as shown in the sub-routine of FIG. 9, the certificate verifier 19 determines whether verification of a public key and a secret key of the apparatus certificate is OK in step 31, whether a time of the apparatus certificate is within an expiration date in step 32, and whether the apparatus certificate and a host part of communication match in step 33. If all the determinations described above are OK, the certificate verifier 19 determines the verification of the apparatus certificate as OK in step 34, and if at least one of the determinations is NG, the certificate verifier 19 determines the verification of the apparatus certificate as NG in step 35, and the process returns to the main routine of FIG. 1.

In this manner, in the verification of the apparatus certificate, the validity of the apparatus certificate is verified by the verification of a format of the apparatus certificate, verification of a match between the apparatus certificate and the name of the self apparatus that acquired the apparatus certificate, and verification of the expiration date of the apparatus certificate.

Next, a verification process of the intermediate certificate is described in detail.

As to the verification process of the intermediate certificate, as shown in the sub-routine of FIG. 10, the certificate verifier 19 repeats the following process to all the listed candidates of intermediate certificates, in the processes of steps 41-44. The certificate verifier 19 performs processes to determine whether a chain with the apparatus certificate or an intermediate certificate of one stage below is verified as OK in step 42, and whether a time of the intermediate certificate is within an expiration date in step 43, to check all the input candidates of the intermediate certificate. If the determinations are all OK, the verification of the intermediate certificate is determined to be OK in step 45, and if at least one of the determinations is NG, the verification of the intermediate certificate is determined to be NG in step 46, and the process returns to the main routine of FIG. 1.

In this manner, in the verification of the intermediate certificate, the verification of the chain with the apparatus certificate is performed. If there are plural intermediate certificates, verifications of plural chains are performed.

Here, even when there is a candidate that is not the intermediate certificate, the candidate is in the list of intermediate certificates. Therefore, when the candidate that is not the intermediate certificate is included, the entire candidates are processed as NG.

In this manner, in the verification of the intermediate verification, the validity of the intermediate certificate is verified by verifying the chain with the apparatus certificate and verifying the expiration date of the intermediate certificate.

Next, in FIG. 6, when the apparatus certificate and intermediate certificate have been introduced successfully, the security management service 16 reports the success of the introduction to the web application 15 (e10). The web application 15 performs rebooting, and at the same time sends a reboot screen to the web server 26 (e11). The web server 26 sends the reboot screen to the browser 25 (e12). The browser 25 displays a screen as shown in FIG. 16.

If the apparatus certificate and intermediate certificate could not be introduced, the security management service 16 reports an error to the web application 15 (e13). The web application 15 sends an error notification screen to the web server 26 (e14). The web server 26 sends the error notification screen to the browser 25 (e15). The browser 25 displays an error notification screen as shown in FIG. 17.

In the above-described introducing process, when there is already an apparatus certificate that has been introduced and is being requested, the introduced apparatus certificate and an intermediate certificate, and a requisition being requested can be simultaneously displayed by a certificate detailed information screen as shown in FIG. 18.

In this embodiment, a requisition is sent to the certificate providing server, and upon reception of an intermediate certificate and an apparatus certificate signed by an intermediate certificate authority, the apparatus certificate and intermediate certificate are verified and introduced. Here, the apparatus certificate and intermediate certificate may be introduced simultaneously or separately.

Note that when the apparatus certificate and intermediate certificate are separately introduced, a warning (indicating that a signature of a certificate cannot be verified) of a browser may be displayed until the intermediate certificate is introduced, depending on an implementation and setting of the browser.

Further, the example of the case of introducing a certificate in a text format has been described in this embodiment, but a file may be directly sent to be introduced.

According to this embodiment, when introducing an intermediate certificate to an electronic apparatus remotely, minimum required verifications are performed for communication, such as matching with a signature of an electronic certificate stored in the electronic apparatus. Therefore, the intermediate certificate can be reliably introduced remotely via a communication path into the electronic apparatus.

Further, a problem that influences communication can be avoided, such as a corruption of a file of the intermediate certificate.

Moreover, by not associating an intermediate certificate that is not related to the apparatus certificate, a problem such as a warning at the time of communication and a communication stop, can be avoided.

In addition, a warning is not displayed due to an expiration of a limited period of the file of the intermediate certificate.

Further, a warning is not displayed due to a mismatch between a common name of a certificate and a host.

Further, a warning is not displayed during a period from when the apparatus certificate is introduced until when the intermediate certificate is introduced.

Further, when the expiration date of the intermediate certificate is extended, only the intermediate certificate is required to be updated. Therefore, management operations can be reduced.

Furthermore, an association between the intermediate certificate and apparatus certificate can be easily checked. Therefore, management operations can be reduced.

An electronic apparatus according to the present invention can be applied to electronic apparatuses in general, such as a digital copier; a printer; a facsimile machine; an image forming apparatus including an MFP having plural functions such as copying, printing, or communication; an image reading apparatus; or a PC.

According to at least one embodiment of the present invention, an electronic apparatus of the present invention can reliably introduce an intermediate certificate remotely via a communication path.

The present invention is not limited to the above-mentioned embodiment, but variations and modifications may be made without departing from the scope of the present invention as claimed.

## Claims

1. An electronic apparatus (1) capable of introducing an apparatus certificate (34) of the electronic apparatus and an intermediate certificate (31-33) of an intermediate certificate authority (4) which signs the apparatus certificate, said electronic apparatus comprising:
a communication unit (11);
a separation unit (17) configured to separate the intermediate certificate (31-33) from the apparatus certificate (34) acquired by the communication unit from the intermediate certificate authority (4);
an apparatus certificate verifying unit (19) configured to verify the validity of the apparatus certificate (34) separated by the separating unit (17) ;
an intermediate certificate verifying unit (19) configured to verify the validity of the intermediate certificate separated by the separating unit; and
an introducing unit (17) configured to introduce the apparatus certificate and the intermediate certificate for storage (20) in the electronic apparatus (1) only when both the apparatus certificate and the intermediate certificate are verified.

2. The electronic apparatus as claimed in claim 1, wherein the apparatus certificate verifying unit (19) is configured to verify the validity of the apparatus certificate by verifying a format of the apparatus certificate, verifying a match between the apparatus certificate and a name of the electronic apparatus that acquired the apparatus certificate, and verifying an expiration date of the apparatus certificate.

3. The electronic apparatus as claimed in claim 1, wherein the intermediate certificate verifying unit (19) is configured to verify the validity of the intermediate certificate by verifying a chain of the intermediate certificate with the apparatus certificate and verifying an expiration date of the intermediate certificate.

4. The electronic apparatus as claimed in claim 1, wherein the introducing unit (17) simultaneously introduces the apparatus certificate and the intermediate certificate.

5. The electronic apparatus as claimed in claim 1, wherein, when extending an expiration date of the intermediate certificate (31-33), the introducing unit (17) introduces only the intermediate certificate to update the intermediate certificate.

6. The electronic apparatus as claimed in claim 1, further comprising a unit (24) configured to display detailed information of the apparatus certificate and the intermediate certificate.

7. An introducing method performed by an electronic apparatus (1) capable of introducing an apparatus certificate (34) of the electronic apparatus and an intermediate certificate (31-33) of an intermediate certificate authority (4) which signs the apparatus certificate, said method comprising the steps of:
separating the intermediate certificate from the apparatus certificate acquired by a communication unit (11) from the intermediate certificate authority (4) ;
verifying the validity of the apparatus certificate separated by the separating step;
verifying the validity of the intermediate certificate separated by the separating step; and
introducing the apparatus certificate and the intermediate certificate for storage in the electronic apparatus only when both the apparatus certificate and the intermediate certificate are verified.

8. The introducing method as claimed in claim 7, wherein the step of verifying the validity of the apparatus certificate includes verifying a format of the apparatus certificate, verifying a match between the apparatus certificate and a name of the electronic apparatus that acquired the apparatus certificate, and verifying an expiration date of the apparatus certificate.

9. The introducing method as claimed in claim 7, wherein the step of verifying the validity of the intermediate certificate includes verifying a chain of the intermediate certificate with the apparatus certificate and verifying an expiration date of the intermediate certificate.

10. The introducing method as claimed in claim 7, wherein the apparatus certificate and the intermediate certificate are simultaneously introduced in the introducing step.

11. The introducing method as claimed in claim 7, wherein, when extending an expiration date of the intermediate certificate, only the intermediate certificate is introduced to update the intermediate certificate in the introducing step.

12. The introducing method as claimed in claim 7, further comprising the step of displaying detailed information of the apparatus certificate and the intermediate certificate.

## Patentansprüche

1. Elektronische Vorrichtung (1), die zum Einführen eines Vorrichtungszertifikats (34) der elektronischen Vorrichtung und eines Zwischenzertifikats (31-33) einer Zwischenzertifizierungsstelle (4), die das Vorrichtungszertifikat signiert, imstande ist, wobei die elektronische Vorrichtung umfasst:
eine Kommunikationseinheit (11);
eine Trenneinheit (17), die dafür konfiguriert ist, das Zwischenzertifikat (31-33) von dem Vorrichtungszertifikat (34) zu trennen, das durch die Kommunikationseinheit von der Zwischenzertifizierungsstelle (4) erlangt wurde;
eine Vorrichtungszertifikatsverifizierungseinheit (19), die dafür konfiguriert ist, die Gültigkeit des durch die Trenneinheit (17) getrennten Vorrichtungszertifikats (34) zu verifizieren;
eine Zwischenzertifikatsverifizierungseinheit (19), die dafür konfiguriert ist, die Gültigkeit des durch die Trenneinheit getrennten Zwischenzertifikats zu verifizieren; und
eine Einführeinheit (17), die dafür konfiguriert ist, das Vorrichtungszertifikat und das Zwischenzertifikat nur dann zur Speicherung (20) in der elektronischen Vorrichtung (1) einzuführen, wenn sowohl das Vorrichtungszertifikat als auch das Zwischenzertifikat verifiziert worden sind.

2. Elektronische Vorrichtung nach Anspruch 1, worin die Vorrichtungszertifikatsverifizierungseinheit (19) dafür konfiguriert ist, die Gültigkeit des Vorrichtungszertifikats durch Verifizieren eines Formats des Vorrichtungszertifikats, Verifizieren einer Übereinstimmung zwischen dem Vorrichtungszertifikat und einem Namen der elektronischen Vorrichtung, die das Vorrichtungszertifikat erlangte, und Verifizieren eines Ablaufdatums des Vorrichtungszertifikats zu verifizieren.

3. Elektronische Vorrichtung nach Anspruch 1, worin die Zwischenzertifikatsverifizierungseinheit (19) dafür konfiguriert ist, die Gültigkeit des Zwischenzertifikats durch Verifizieren einer Kette des Zwischenzertifikats mit dem Vorrichtungszertifikat und Verifizieren eines Ablaufdatums des Zwischenzertifikats zu verifizieren.

4. Elektronische Vorrichtung nach Anspruch 1, worin die Einführeinheit (17) das Vorrichtungszertifikat und das Zwischenzertifikat gleichzeitig einführt.

5. Elektronische Vorrichtung nach Anspruch 1, worin, wenn ein Ablaufdatum des Zwischenzertifikats (31-33) verlängert wird, die Einführeinheit (17) nur das Zwischenzertifikat einführt, um das Zwischenzertifikat zu aktualisieren.

6. Elektronische Vorrichtung nach Anspruch 1, ferner eine Einheit (24) umfassend, die dafür konfiguriert ist, ausführliche Information des Vorrichtungszertifikats und des Zwischenzertifikats anzuzeigen.

7. Einführverfahren, durchgeführt durch eine elektronische Vorrichtung (1), die zum Einführen eines Vorrichtungszertifikats (34) der elektronischen Vorrichtung und eines Zwischenzertifikats (31-33) einer Zwischenzertifizierungsstelle (4), die das Vorrichtungszertifikat signiert, imstande ist, wobei das Verfahren die Schritte umfasst:
Trennen des Zwischenzertifikats von dem Vorrichtungszertifikat, das durch eine Kommunikationseinheit (11) von der Zwischenzertifizierungsstelle (4) erlangt wurde;
Verifizieren der Gültigkeit des durch den Trennungsschritt getrennten Vorrichtungszertifikats;
Verifizieren der Gültigkeit des durch den Trennungsschritt getrennten Zwischenzertifikats; und
Einführen des Vorrichtungszertifikats und des Zwischenzertifikats zur Speicherung in der elektronischen Vorrichtung nur dann, wenn sowohl das Vorrichtungszertifikat als auch das Zwischenzertifikat verifiziert worden sind.

8. Einführverfahren nach Anspruch 7, worin der Schritt des Verifizierens der Gültigkeit des Vorrichtungszertifikats einschließt: Verifizieren eines Formats des Vorrichtungszertifikats, Verifizieren einer Übereinstimmung zwischen dem Vorrichtungszertifikat und einem Namen der elektronischen Vorrichtung, die das Vorrichtungszertifikat erlangte, und Verifizieren eines Ablaufdatums des Vorrichtungszertifikats.

9. Einführverfahren nach Anspruch 7, worin der Schritt des Verifizierens der Gültigkeit des Zwischenzertifikats einschließt: Verifizieren einer Kette des Zwischenzertifikats mit dem Vorrichtungszertifikat und Verifizieren eines Ablaufdatums des Zwischenzertifikats.

10. Einführverfahren nach Anspruch 7, worin im Einführschritt das Vorrichtungszertifikat und das Zwischenzertifikat gleichzeitig eingeführt werden.

11. Einführverfahren nach Anspruch 7, worin, wenn ein Ablaufdatum des Zwischenzertifikats verlängert wird, im Einführschritt nur das Zwischenzertifikat eingeführt wird, um das Zwischenzertifikat zu aktualisieren.

12. Einführverfahren nach Anspruch 7, ferner den Schritt umfassend: Anzeigen ausführlicher Information des Vorrichtungszertifikats und des Zwischenzertifikats.

## Revendications

1. Appareil électronique (1) en mesure d'introduire un certificat d'appareil (34) de l'appareil électronique et un certificat intermédiaire (31-33) d'une autorité de certification intermédiaire (4) qui signe le certificat d'appareil, ledit appareil électronique comprenant :
une unité de communication (11) ;
une unité de séparation (17) configurée de manière à séparer le certificat intermédiaire (31-33) du certificat d'appareil (34) acquis par l'unité de communication auprès de l'autorité de certification intermédiaire (4) ;
une unité de vérification de certificat d'appareil (19) configurée de manière à vérifier la validité du certificat d'appareil (34) séparé par l'unité de séparation (17) ;
une unité de vérification de certificat intermédiaire (19) configurée de manière à vérifier la validité du certificat intermédiaire séparé par l'unité de séparation ; et
une unité d'introduction (17) configurée de manière à introduire le certificat d'appareil et le certificat intermédiaire à des fins de stockage (20) dans l'appareil électronique (1) uniquement lorsque le certificat d'appareil et le certificat intermédiaire sont tous deux vérifiés.

2. Appareil électronique selon la revendication 1, dans lequel l'unité de vérification de certificat d'appareil (19) est configurée de manière à vérifier la validité du certificat d'appareil en vérifiant un format du certificat d'appareil, en vérifiant une correspondance entre le certificat d'appareil et un nom de l'appareil électronique ayant acquis le certificat d'appareil, et en vérifiant une date d'expiration du certificat d'appareil.

3. Appareil électronique selon la revendication 1, dans lequel l'unité de vérification de certificat intermédiaire (19) est configurée de manière à vérifier la validité du certificat intermédiaire en vérifiant une chaîne du certificat intermédiaire avec le certificat d'appareil et en vérifiant une date d'expiration du certificat intermédiaire.

4. Appareil électronique selon la revendication 1, dans lequel l'unité d'introduction (17) introduit simultanément le certificat d'appareil et le certificat intermédiaire.

5. Appareil électronique selon la revendication 1, dans lequel, lors de la prolongation d'une date d'expiration du certificat intermédiaire (31-33), l'unité d'introduction (17) introduit uniquement le certificat intermédiaire en vue de mettre à jour le certificat intermédiaire.

6. Appareil électronique selon la revendication 1, comprenant en outre une unité (24) configurée de manière à afficher des informations détaillées du certificat d'appareil et du certificat intermédiaire.

7. Procédé d'introduction mis en oeuvre par un appareil électronique (1) en mesure d'introduire un certificat d'appareil (34) de l'appareil électronique et un certificat intermédiaire (31-33) d'une autorité de certification intermédiaire (4) qui signe le certificat d'appareil, ledit procédé comprenant les étapes ci-dessous consistant à :
séparer le certificat intermédiaire du certificat d'appareil acquis par une unité de communication (11) auprès de l'autorité de certification intermédiaire (4) ;
vérifier la validité du certificat d'appareil séparé à l'étape de séparation ;
vérifier la validité du certificat intermédiaire séparé à l'étape de séparation ; et
introduire le certificat d'appareil et le certificat intermédiaire à des fins de stockage dans l'appareil électronique uniquement lorsque le certificat d'appareil et le certificat intermédiaire sont tous deux vérifiés.

8. Procédé d'introduction selon la revendication 7, dans lequel l'étape de vérification de la validité du certificat d'appareil consiste à vérifier un format du certificat d'appareil, à vérifier une correspondance entre le certificat d'appareil et un nom de l'appareil électronique ayant acquis le certificat d'appareil, et à vérifier une date d'expiration du certificat d'appareil.

9. Procédé d'introduction selon la revendication 7, dans lequel l'étape de vérification de la validité du certificat intermédiaire consiste à vérifier une chaîne du certificat intermédiaire avec le certificat d'appareil et à vérifier une date d'expiration du certificat intermédiaire.

10. Procédé d'introduction selon la revendication 7, dans lequel le certificat d'appareil et le certificat intermédiaire sont introduits simultanément à l'étape d'introduction.

11. Procédé d'introduction selon la revendication 7, dans lequel, lors de la prolongation d'une date d'expiration du certificat intermédiaire, seul le certificat intermédiaire est introduit pour mettre à jour le certificat intermédiaire à l'étape d'introduction.

12. Procédé d'introduction selon la revendication 7, comprenant en outre l'étape consistant à afficher des informations détaillées du certificat d'appareil et du certificat intermédiaire.
